# EUROPÄISCHE PATENTSCHRIFT

(11) **EP 2 569 757 B1**
(45) Veröffentlichungstag und Bekanntmachung des Hinweises auf die Patenterteilung: **01.07.2015**
(21) Anmeldenummer: 11726362.4
(22) Anmeldetag: 11.05.2011
(51) Int. Cl.: G06T 7/00, G06T 7/40

(54) **BEWEGUNGSANALYSE- UND/ODER -VERFOLGUNGSSYSTEM**
MOVEMENT ANALYSIS AND/OR TRACKING SYSTEM
SYSTÈME D'ANALYSE ET/OU DE SUIVI DE MOUVEMENTS

(30) Priorität: 11.05.2010 DE 102010028904
(43) Veröffentlichungstag der Anmeldung: 20.03.2013
(73) Patentinhaber: Movolution GmbH, 85716 Unterschleißheim (DE)
(72) Erfinder: RUSS, Andreas, 85716 Unterschleißheim (DE); RUSS, Philipp, 85716 Unterschleißheim (DE); SCHUBERT, Sebastian, 85716 Unterschleißheim (DE); WINKLER, Tobias, . (DE)
(74) Vertreter: Heilein, Ernst - Peter
(86) Internationale Anmeldenummer: PCT/EP2011/057654
(87) Internationale Veröffentlichungsnummer: WO 2011/141531

(56) Entgegenhaltungen:
- US-A1- 2007 242 086
- KATSUNARI SATO ET AL: "Development of grip-type master hand â MeisterGRIPâ", ROBOTICS AND AUTOMATION, 2009. ICRA '09. IEEE INTERNATIONAL CONFERENCE ON, IEEE, PISCATAWAY, NJ, USA, 12. Mai 2009 (2009-05-12), Seiten 3283-3288, XP031509961, ISBN: 978-1-4244-2788-8
- HANAI M ET AL: "Physical motion analysis system in driving using image processing", INTELLIGENT SIGNAL PROCESSING AND COMMUNICATION SYSTEMS, 2009. ISPACS 2009. INTERNATIONAL SYMPOSIUM ON, IEEE, PISCATAWAY, NJ, USA, 7. Januar 2009 (2009-01-07), Seiten 123-126, XP031612878, ISBN: 978-1-4244-5015-2

## Beschreibung

Die vorliegende Erfindung betrifft ein Bewegungsanalyse- und/oder - verfolgungssystem von bewegten oder sich bewegenden Objekten, welche mit aktiv oder passiv strahlenden Markerelementen versehen sind.

Der Bedarf an Bewegungsanalyse- und/oder -verfolgungssystemen ist weit verbreitet und in den unterschiedlichsten Bereichen gegeben, insbesondere um Schwachpunkte in einem Bewegungsablauf aufzudecken. Vornehmlich werden Bewegungsanalysen bei Menschen oder Tieren durchgeführt, um in Medizin oder Sport die Biomechanik zu verbessern. Ein vergleichbares Ziel wird mit der Analyse der Bewegungsabläufe von Roboterarmen oder dergleichen Greifern verfolgt. Grundlage einer jeden Bewegungsanalyse ist dabei die zuverlässige Erfassung insbesondere von Winkel- und anderer Messdaten möglichst in Echtzeit (real time).

In vielen Anwendungen wird dabei der zu analysierende Körper (Mensch, Tier oder Roboter, etc.) mit mehreren Markerelementen versehen. Die Datenerfassung erfolgt mit Hilfe von Kameras, die die Positionsänderungen der am Bewegungsapparat angebrachten Markerelemente aufnehmen und einem Datenverarbeitungssystem zur Auswertung bereitstellen. Eine Schwierigkeit besteht bei diesen Anwendungen darin, die Bewegung jedes einzelnen Markerelementes in Echtzeit (real time) zu verfolgen und diesen automatisiert eine eindeutige Identität zuzuordnen.

Bisher konnten Daten in Echtzeit (real time) nur in Systemen mit vorheriger Infrarotfilterung durchgeführt werden. Bekannte Infrarot-Systeme zeichnen sich durch den Einsatz spezieller und damit gewöhnlich sehr teurer Infrarot-Kameras aus, welche von passiven oder aktiven Infrarot-Markerelementen erzeugte Kontrastpunkte im Bild zu lokalisieren suchen, was in bekannten Infrarot-Systemen verhältnismäßig gut gelingt, da alle Infrarotbildinformationen bis auf die leuchtenden Kontrastpunkte (Marker) weggefiltert werden. Die Lokalisierung der infrarot-aktiven Kontrastpunkte erfolgt gewöhnlich in einer in der Kamera integrierten Lokalisierungseinheit, welche sodenn auch nur die sich bewegenden Pixelkoordinaten der infrarot-aktiven Markerelemente an eine Identifikationseinheit weiterleitet. Infrarot-aktive Markerelemente identifizieren sich selbst meistens über eine Pulsfrequenz- oder Leuchtreihenfolge. Dabei besteht allerdings das Problem, das die Stromversorgung für einen Taktgeber sehr groß ist und meistens alle Markerelemente miteinander verkabelt sein müssen. Dadurch entstehen erhebliche Störeffekte bei der Messung, da die Bewegungen behindert werden. Infrarotsysteme haben schließlich zum Nachteil, dass sie nur Positionsdaten der Markerelemente bereitstellen. Somit gehen alle Bildinformationen verloren, die für viele Prozesse allerdings wichtig sind, insb. wenn, wie in den meisten Anwendungen, die Anwender nicht in der Interpretation von Datenkurven geschult sind, sondern - visuell geprägt - Videodaten, welche eine visuelle Analyse der verfolgten Bewegungen unmittelbar im Farbbild gestatten, bevorzugen würden.

Die Erkennung in Videos war bisher nur durch manuelles Markieren von Fixpunkten oder passiver, retro-reflektiver Markerelemente im Bild mittels Kursor und semiautomatischer Verfolgung mit wiederholter Korrektor möglich. Passive Markerelemente werden dabei von Leuchtmitteln im Raum oder an den Kameras angestrahlt, deren reflektierendes Licht einen Kontrastpunkt im Bild erzeugt. Die Erfassung passiver, retro-reflektiver Markerelemente funktioniert insoweit gut, allerdings ist keine automatisierte Identifikation unter mehreren gleichen Markerelementen möglich. Bekannte Videosysteme zeichnen sich durch Geräte zur Bildaufnahme (Videokameras) aus, welche die von den retroreflektiven Markerelementen erzeugten Kontrastpunkte zu lokalisieren suchen. Nachteilig daran ist, dass bildverarbeitende Lokalisierungen sehr komplex sind, da das ganze Videobild auf Kontrastpunkte analysiert (durchsucht) werden muss. Bisher gibt es keine zufriedenstellende Lösung, was die Zuverlässigkeit und den Zeitbedarf angeht. Deswegen sind Videosysteme bis heute gewöhnlich auf eine Vielzahl manueller Bedienungen angewiesen. So sind zunächst im ersten Videobild die sichtbaren Kontrastpunkte (Marker) manuell zuzuordnen, d.h. es ist dem System beispielsweise durch Mausklick mitzuteilen, dass hier ein bestimmter Kontrastpunkt (z.B. Markerelement für das Knie) verfolgt werden soll. Die eindeutige Zuordnung der Kontrastpunkte gestattet dem System, diese unter dem Bewegungsablauf weiterzuverfolgen, solange der Kontrastpunkt identifizierbar bleibt. Häufig kommt es aber aufgrund von Verdeckungen oder Kontrastunschärfen dazu, dass Kontrastpunkte nicht mehr gefunden oder vom System falsch identifiziert werden, was manuelle Neuzuordnungen erforderlich macht.

Die US 2007/242086 A1 offenbart ein Bewegungsanalyse- und/oder - verfolgungssystem von bewegten oder sich bewegenden Objekten, welche mit mehreren aktiv oder passiv farblich verschieden strahlenden Markerelementen versehen sind, die jeweils in einer definierten Farbe und mit rundlicher oder ellipsenförmiger Geometrie strahlen. Das bekannte System umfasst: - zumindest eine Kamera zur Aufnahme der Bewegung des oder der Objekte, welche mittels wenigstens eines Farbbildaufnehmers fortlaufend als digitale Farbbilder gespeichert werden; - eine erste Transformatoreinheit, welche die digital gespeicherten Farbbilder fortlaufend in RGB-Bilder des sogenannten RGB-Farbraumes umwandelt, so dass je Farbbildpunkt drei Farbintensitäten vorliegen; - eine Graubilderzeugungseinheit, welche je Farbbildpunkt ... einen Grauwert übernimmt und korrespondierend zu den RGB-Bildern fortlaufend als monochromes Graubild speichert; - eine Lokalisierungseinheit, welche ausschließlich jeden Grauwert mit einem definierten Schwellwert vergleicht und oberhalb des Schwellwertes liegende Grauwerte als Mitglied einer, ein potentielles Markerelement repräsentierende, Pixelwolke speichert; und eine Vermessungseinheit, welche die Geometrie einer jeden Pixelwolke ausschließlich im Graubild vermisst.

Im Übrigen sei noch auf die Fachaufsätze von: S. Katsunari et.al. in Robotics and Automation, 2009, ICRA '09, Idee International Conference On, IEEE, Piscataway, NJ, USA, 12. Mai 2009, Seiten 3283-3288, XP031509961, ISBN: 978-1-4244-2788-8 zum Thema: "Development of Grip-type Master Hand ,MeisterGRIP' "; sowie von: M. Hanai et.al. in Intelligent Signal Processing And Communication Systems, 2009, ISPACS 2009, International Symposium On, IE-EE, Piscataway, NJ, USA, 07. Januar 2009, Seiten 123-126, XP031612878, ISBN: 978-1-4244-5015-2 zum Thema *"Physical Motion Analysis System in Driving using Image Processing".*

Hiervon ausgehend liegt der vorliegenden Erfindung die Aufgabe zugrunde, ein verbessertes Bewegungsanalyse- und/oder -verfolgungssystem bereitzustellen, welches die vorstehend genannten Nachteile vermeidet. Insbesondere sollen die mit der Verfolgung von Markerelementen verbundenen Probleme auf preiswerte Weise dergestalt überwunden werden, dass die Notwendigkeit manueller Zuordnungen einzelner Markerpunkte minimiert beziehungsweise eliminiert sind. Darüber hinaus soll ein in Echtzeit (realtime) arbeitendes System bereitgestellt werden. Schließlich soll ein System nach der Erfindung auch verloren gegangene Markerelemente automatisch identifizieren und wiedererkennen können.

Diese Aufgabe wird durch ein Bewegungsanalyse- und/oder -verfolgungssystem von mit mehreren farblich verschiedenen aktiv oder passiv jeweils in einer definierten Farbe und mit rundlicher oder ellipsenförmiger Geometrie strahlender Markerelementen versehener bewegten oder sich bewegenden Objekten mit den Merkmalen des Patentanspruchs 1 gelöst.

Das erfindungsgemäße System zeichnet sich zunächst durch zumindest eine Kamera zur Aufnahme der Bewegungen des oder der Objekte aus, welche mittels wenigstens eines Farbbildaufnehmers fortlaufend als digitale Farbbilder (FB) gespeichert werden. Als Kameras können je nach Anwendung neben hochkomplexen Filmkameras, welche auf fotographischer Technik basieren, insbesondere auch handelsübliche Videokameras, deren Bildaufnahme fortlaufend erfolgt, Verwendung finden, wobei letztgenannte aufgrund ihrer niedrigen Preise einen insgesamt niedrigen Systempreis zum Vorteil haben.

Des Weiteren umfasst das erfindungsgemäße System eine erste Transfor-matoreinheit, welche die digital gespeicherten Farbbilder (FB) fortlaufend in RGB-Bilder des sogenannten RGB-Farbraumes umwandelt, so dass je Farbbildpunkt (Pixel P) drei Farbintensitäten (R, G, B) vorliegen. Unter RGB-Farbraum wird dabei bekanntlich ein additiver Farbraum verstanden, der - basierend auf der Dreifarbentheorie - Farbnachbildungen durch das additive Mischen dreier Grundfarben (Rot (R), Grün (G) und Blau (B)) nachbildet.

Mittels einer Graubilderzeugungseinheit, welche je Farbbildpunkt (P) das Maximum der drei Farbintensitäten (R oder G oder B) als Grauwert (GW) übernimmt, wird korrespondierend zu den RGB-Bildern fortlaufend ein monochromes Graubild (GB) gespeichert. Damit kann vorteilhaft sichergestellt werden, dass die Markerelemente als helle Flecken (Kontrastpunkte) im Graubild (GB) erscheinen, was deren Lokalisierung erleichtert.

Die automatische Lokalisierung der Mitglieder einer, ein potentielles Markerelement repräsentierenden, Pixelwolke (PW) erfolgt in einer Lokalisierungseinheit, welche ausschließlich jeden Grauwert (GW) mit einem definierten Schwellwert (SW) vergleicht und oberhalb des Schwellwertes (SW) liegende Grauwerte (GW) als Mitglied einer, ein potentielles Markerelement repräsentierende, Pixelwolke (PW) speichert.

Die automatische Plausibilisierung lokalisierter Pixelwolken darauf, ob diese ein Markerelement repräsentieren, erfolgt in einer Vermessungseinheit, welche die Geometrie (insbesondere die Form und/oder die Größe und/oder den Mittelpunkt) einer jeden Pixelwolke (PW) ausschließlich im Graubild (GB) vermisst und als Markerelemente ausschließbare Pixelwolken (PW) wieder löscht.

Schließlich umfasst das erfindungsgemäße Bewegungsanalyse- und/oder - verfolgungssystem zur automatischen Identifizierung erkannter, d.h. lokalisierter und plausibilisierter, Markerelemente eine Identifizierungseinheit, welche die Farbe der ausschließlich im Graubild (GB) als Markerelemente bestätigten Pixelwolken (PW) im digital gespeichertem Farbbild (FB) bestimmt.

Anders als im Stand der Technik anzutreffen ermöglicht das erfindungsgemäße System erstmals mehrere, farblich verschiedene, jeweils in einer definierten Farbe und mit rundlicher oder ellipsenförmiger Geometrie strahlender Markerelemente vollautomatisch zu verfolgen und Winkel und andere Messdaten für Bewegungsanalysen zu erfassen.

Vorteilhafte Ausführungsformen der Erfindung, welche einzeln oder in Kombination miteinander einsetzbar sind, sind in den abhängigen Ansprüche angegeben.

So kann bevorzugt eine Reduzierungseinheit vorgesehen werden, welche der Lokalisierungseinheit ein verkleinertes, vorzugsweise in Breite und Höhe wenigstens halbiertes, Graubild (GB_{red}.) bereitstellt. Diese, wie auch weitere denkbare Verkleinerungen um ein Drittel oder gar ein Viertel des Originalbildes steigern vorteilhaft die Arbeitsgeschwindigkeit des Systems, das damit erstmals robust Erfassung und Analyse von Videodaten in Echtzeit (realtime) gestattet.

Desweiteren bevorzugt kann eine Schwellwertbestimmungseinheit vorgesehen sein, welche den von der Lokalisierungseinheit zugrunde gelegten Schwellwert (SW) in Abhängigkeit der Helligkeitsverteilung im Umfeld (U) des zum Vergleich anstehenden Grauwertes (GW) dynamisch bestimmt, was eine bessere Bestimmung von Pixelwolken (PW) zum Vorteil hat.

In diesem Zusammenhang hat sich bewährt, das Umfeld (U) der Helligkeitsverteilung wenigstens doppelt so groß zu bemessen wie eine maximal als erlaubt gewählte Größe einer, ein potentielles Markerelement typischerweise repräsentierenden, Pixelwolke (PW), was die Bestimmung der Pixelwolken (PW) weiter verbessert.

Zur eindeutigen Identifikation der Farbe eines Markerelementes ist schließlich eine zweite Transformationseinheit vorgesehen, welche der Identifizierungseinheit aus den digital gespeicherten Farbbildern (FB) fortlaufend transformierte HSV-Bilder des sogenannten HSV-Farbraum zur Bestimmung der Farbe eines Markerelementes bereitstellt. Der HSV-Farbraum ist bekanntlich der Farbraum etlicher Farbmodelle, bei denen man die Farbe mit Hilfe des Farbtons (englisch *hue*), der Farbsättigung (*saturation*) und des Hellwertes bzw. der Dunkelstufe (*value*) definiert.

Als mit einer definierten Farbe und mit rundlicher oder ellipsenförmiger Geometrie strahlende Markerelemente können passive oder aktive Markerelemente Verwendung finden.

Als passive Markerelemente haben sich insbesondere von wenigstens einem Beleuchtungsmittel angestrahlte retro-refektiv strahlende Prismen oder sphärische Körper bewährt, welche auf ihrer Oberfläche ein reflektierendes Bauteil mit hoher Richtwirkung aufweisen, das Licht einer speziellen Wellenlänge (Farbe) reflektiert, und beispielsweise aus der DE 691 10 142 T2 bekannt sind.

Erfindungsgemäß bevorzugt finden jedoch aktiv-selbstleuchtend ausgebildete Markerelemente Verwendung, welche vorteilhaft den mit Beleuchtungsmitteln verbundenen Aufwand vermeiden und auch keinerlei Verkabelung mit einer Stromquelle benötigen, wenn diese besonders bevorzugt als batterieversorgte LED-Leuchte ausgebildet sind.

Die LED-Leuchte kann unmittelbar an einer Batteriehalterung befestigt sein und/oder eine besondere Wellenlänge (Farbe), Abstrahlwinkel und/oder Leuchtintensität aufweisen.

Insbesondere haben sich LED-Leuchten in den Farben rot, grün und/oder blau bewährt, welche einen bevorzugten Abstrahlwinkel alpha (α) von mindestens 130° und bis zu 170° sowie eine vorzugsweise superbreite Leuchtintensität aufweisen.

Zur Vereinheitlichung der rundlichen Geometrie eines als LED-Leuchte ausgebildeten Markerelementes hat sich schließlich bewährt, die eine oder mehreren LEDs einer LED-Leuchte mit einem kugelförmigen Kunststoffschirm zu umgeben, welcher im Kamerabild stets eine rundliche oder ellipsenförmige Geometrie aufweist.

Das erfindungsgemäße System kann Videodaten der, bevorzugt kugelförmig ausgebildeter, Markerelemente erstmals echtzeitnah lokalisieren und über die Zeit verfolgen.

Die Erfindung wird nachfolgend mit Bezug auf die begleitende Zeichnung anhand eines bevorzugten Ausführungsbeispiels beschrieben:

Darin zeigen schematisch:
- Fig. 1: ein Bewegungsanalyse- und/oder -verfolgungssystem nach der Erfindung;
- Fig. 2: Bildbeispiele der jeweiligen Systemstufen; und
- Fig. 3: ein aktiv-selbstleuchtend ausgebildetes Markerelement.

Bei der nachfolgenden Beschreibung einer bevorzugten Ausführungsform der vorliegenden Erfindung bezeichnen gleiche Bezugszeichen gleiche oder vergleichbare Komponenten.

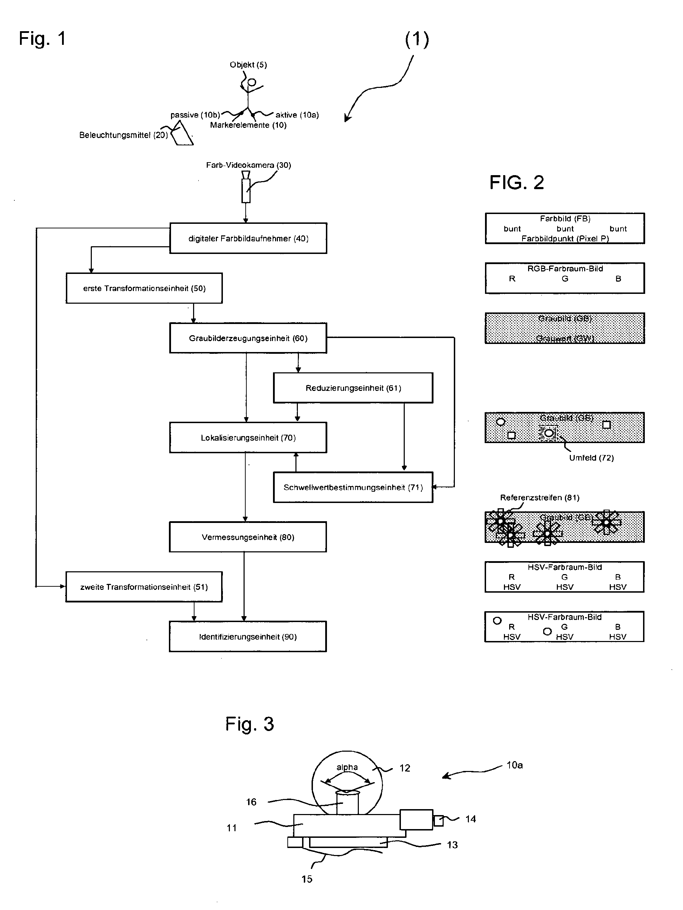

Fig. 1 zeigt ein Bewegungsanalyse- und/oder -verfolgungssystem 1 von bewegten oder sich bewegenden Objekten 5 nach der Erfindung. Die bewegten oder sich bewegenden Objekte 5 können Menschen, Tiere oder Vorrichtungen wie insb. Roboterarme sein. Sie sind mit mehreren, entweder aktiv 10a oder passiv 10b farblich verschieden strahlenden Markerelementen 10 versehen, die 10 jeweils in einer definierten Farbe und mit rundlicher oder (bzw. in Wahrheit) ellipsenförmiger Geometrie strahlen. Die an den Objekten 5 angeordneten, farblich verschieden strahlenden Markerelemente 10 folgen den Bewegungen der Objekte 5, welche durch wenigstens eine Kamera 30 aufgenommen und mittels wenigstens eines Farbbildaufnehmers 40 fortlaufend als digitale Farbbilder (FB) gespeichert werden.

Als Farbbildaufnehmer 40 kommen insbesondere CCD-(Charge-coupled Device)-Chips oder CMOS-(Complementary Metal Oxide Semiconductor)-Sensoren zur Anwendung. Ein CMOS-Chip nimmt das Bild kontinuierlich auf, kann also zu beliebiger Zeit ausgelesen werden. Die Zahl der Bilder pro Sekunde hängt davon ab, wie hoch die Pixel-Frequenz und die Zahl der Pixel des ausgelesenen Bildabschnittes sind, liegen aber höher als beim CCD-Chip. CCDs stellten dagegen einen wichtigen Schritt zur Verkleinerung von Videokameras dar. Auch lassen sich die Bildsensoren kühlen, was wesentlich rauschärmere Bilder ermöglicht.

Um die Farbinformationen im Videobild (FB) nutzbringend zu erhalten muss man zumindest drei Farbkomponenten (rot, grün, blau) speichern. Die offensichtlichste Weise, die Farbtrennung zu erreichen, ist es, drei Bildaufnehmer 40 für je eine Farbe zu verwenden ("Drei-Chipper") und sie über eine Optik zu koppeln, die mit Filtern auch die Farbtrennung übernimmt. Im Zeitalter der Vidicons war das Verfahren gebräuchlich. Heutige 3-Chip-Kameras verteilen das durch das Objektiv fallende Licht gewöhnlich über Prismen bzw. Teilerspiegel auf drei monochrome CCD-Chips. Durch Farbfilter wird erreicht, dass ein Chip die Grünanteile aufnimmt, die anderen beiden jeweils rot bzw. blau. Dieses Verfahren führt zu sehr hochwertigen Bildern und wird daher im professionellen Bereich verwendet.

Insbesondere bei preiswerten Kameras ("Ein-Chipper") wird ein anderes Verfahren verwendet. Der Bildaufnehmer-Chip trägt vor jedem Pixel abwechselnd Farbfilter der jeweiligen Farbe, sodass unterschiedliche nebeneinander liegende Bildpunkte unterschiedliche Farbanteile aufnehmen. Eine Elektronik erzeugt daraus ein Farb-Videosignal. Die erforderliche höhere Pixelzahl (pro Bildpunkt 2×grün, 1×rot, 1×blau) führt meist zu einer schlechteren Auflösung; in jedem Fall aber ist die Farbdarstellung nicht so genau wie bei 3-Chip-Kameras. Ein Bildaufnehmer, der dieses Verfahren nutzt, ist der Bayer-Sensor. Dabei werden vor den lichtempfindlichen Zellen eines CCD-Sensors vor jeder einzelnen Zelle ein winziger Farbfilter in einer der drei RGB-Grundfarben rot (R), grün (G) oder blau (B) aufgebracht. Die Filter sind normalerweise in der Anordnung R-G-R-G und in der nächsten Zeile G-B-G-B angebracht, die in dieser Anordnung das sogenannte "Bayer Pattern" (deutsch: Bayer Muster) ergeben.

Hiervon ausgehend umfasst das erfindungsgemäße System eine erste Transformatoreinheit 50, welche die digital gespeicherten Farbbilder (FB) fortlaufend in RGB-Bilder des sogenannten RGB-Farbraumes umwandelt, so dass je Farbbildpunkt (Pixel P) drei Farbintensitäten (R, G, B) vorliegen.

Mittels einer Graubilderzeugungseinheit 60, welche je Farbbildpunkt (P) das Maximum der drei Farbintensitäten (R oder G oder B) als Grauwert (GW) übernimmt, wird korrespondierend zu den RGB-Bildern fortlaufend ein monochromes Graubild (GB) gespeichert.

Mittels einer lediglich vorzugsweise vorgesehenen Reduzierungseinheit 61 kann ein deutlich verkleinertes Graubild (GB_{red}.) bereitstellt werden, was die Arbeitsgeschwindigkeit des Systems 1 insbesondere für Echtzeit- oder sog. lifestream-Anwendungen merklich steigert, da nicht mehr die gesamte Bildfläche durchsucht werden muss.

Ebenso braucht eine Lokalisierungseinheit 70, welche ausschließlich jeden Grauwert (GW) in einem verkleinertem Graubild (GB_{red}.) mit einem definierten Schwellwert (SW) vergleicht und oberhalb des Schwellwertes (SW) liegende Grauwerte (GW) als Mitglied einer, ein potentielles Markerelement repräsentierende, Pixelwolke (PW) speichert, deutlich weniger Arbeitszeit.

Gleiches gilt für eine ebenfalls lediglich vorzugsweise vorgesehene Schwellwertbestimmungseinheit 71, welche den von der Lokalisierungseinheit 70 zugrunde gelegten Schwellwert (SW) in Abhängigkeit der Helligkeitsverteilung im Umfeld (U) des zum Vergleich anstehenden Grauwertes (GW) dynamisch bestimmt.

Mittels einer Vermessungseinheit 80, welche die Geometrie (insbesondere die Form und/oder die Größe und/oder den Mittelpunkt) einer jeden Pixelwolke (PW) ausschließlich im, bevorzugt nicht verkleinerten, Graubild (GB) vermisst, werden als Markerelemente 10 ausschließbare Pixelwolken (PW) wieder gelöscht.

Fig. 2 zeigt Bildbeispiele der jeweiligen Systemstufen.

Fig. 3 zeigt ein erfindungsgemäß bevorzugt zur Anwendung kommendes aktiv-strahlendes Markerelement 10 in einer Seitenansicht. Das Markerelement 10 besteht aus einer batterieversorgten LED-Leuchte 10a, welche eine LED 16 definierter Wellenlänge in den Farben rot, grün oder blau umfasst. Alternativ können auch LED-Leuchten (nicht dargestellt) Verwendung finden, die beispielsweise drei, jeweils in einer der Grundfarben rot (R), grün (G) und blau (B) strahlende LEDs 16 umfassen, welche einzeln oder gemeinsam einschaltbar und/oder ansteuerbar ausgebildet sein können und so die jeweilige Grundfarbe rot (R), grün (G) oder blau (B) oder eine ableitbare Mischfarbe abstrahlen, was die einsetzbaren Farbvarianzen vorteilhaft erhöht. Die eine oder mehreren LEDs 16 einer LED-Leuchte 10a weist bzw. weisen bevorzugt einen Abstrahlwinkel α von mindestens 130° und bis zu 170° sowie vorzugsweise eine superbreite Leuchtintensität auf

Die eine oder mehreren LEDs (16) einer LED-Leuchte 10a können an einer Batteriehalterung 11 befestigt und von einem Kugel-Schirm 12 aus, vorzugsweise transluzentem (also lichtdurchlässigrem, aber nicht transparentem), Kunststoff umgeben sein. Ein solcher Kugel-Schirm 12 bewirkt stets eine rundlich bzw. elliptisch im Farbbild (FB) erscheinende Kontrastfläche.

Als Batterie 13 haben sich insbesondere sog. Knopfzellen bewährt, welche mittels einer Klemme 15 in der Batteriehalterung 11 gehalten wird. Diese zeichnen sich insbesondere durch eine kleinbauende Größe und einfache Stromversorgung aus. Ein Schalter 14 an der Batteriehalterung 11 gestattet das Ein- und Ausschalten der einen oder mehreren LEDs 16 einer LED-Leuchte 10a. Alternativ zu einem separaten Schaltelement 14 kann auch vorgesehen sein, die Ein- und Ausschaltfunktion durch Drehung des Kugel-Schirms 12 zu bewirken, wobei im Fall mehrerer LEDs 16 bestimmte Winkelstellungen des Kugel-Schirms 12 bestimmten LEDs (rot (R), grün (G) und/oder blau (B)) zugeordnet sein können.

Je nach Wahl der Wellenlänge leuchtet eine erste aktiv-strahlende LED-Leuchte 10a rot (R), eine andere blau (B) und eine dritte grün (G) und so weiter oder ggf. in einer Mischfarbe. Damit enthalten die LED-Leuchten 10a ein eindeutiges Merkmal zu ihrer automatischen Identifizierung.

Diese erfolgt erfindungsgemäß in einer Identifizierungseinheit 90, welche die Farbe der im Graubild (GB) als Markerelemente 10a bestätigten Pixelwolken (PW) im digital gespeichertem Farbbild (FB) bestimmt, insbesondere durch einen Vergleich der ausschließlich im Graubild (GB) lokalisierten Bildstellen im Farbbild (FB).

Zur eindeutigen Identifikation der Farbe eines Markerelementes 10a kann bevorzugt eine zweite Transformationseinheit 51 vorgesehen sein, welche der Identifizierungseinheit 90 aus den digital gespeicherten Farbbildern (FB) fortlaufend transformierte HSV-Bilder des sogenannten HSV-Farbraum zur Bestimmung der Farbe eines Markerelementes 10a bereitstellt.

Soweit mehr Markerelemente 10a benötigt werden als ein rot (R), blau (B) oder grün (G) leuchtendes Markerelement 10a, kann die Identifizierung über definierte Anordnungen weiterer rot (R), grün (G) oder blau (B) leuchtender Markerelemente 10a und/oder den Einsatz weiterer Markerelemente 10a mit andersfarblicher LED wie gelb (Y) oder violett (V) etc. und/oder mehreren, verschiedenfarbigen LEDs, sichergestellt werden.

Zur genauen Vermessung, insbesondere des Mittelpunktes, eines Markerelementes 10 verwendet die Vermessungseinheit 80 an Stelle einer Rundungssuche bevorzugt einen sogenannten Ellipsefitting-Ansatz, der auf Abtastpunkte (sog. Samplepunkte) der Pixelwolke (PW) einer potentiellen Markerkontur angewendet wird. Um diese Abtastpunkte zu bestimmen, wird zuerst eine Schätzung des Mittelpunktes der Pixelwolke (PW) des potentiellen Markerelementes 10 angenommen.

Von einem geschätzten Mittelpunkt aus kann dann in, beispielsweise acht, diskreten Richtungen nach den Graubildpunkten mit dem maximalen Kontrast (hier als maximale Helligkeitsänderung angenommen) gesucht werden. Dabei kann angenommen werden, dass die Pixelwolke (PW) als Abbild eines Markerelementes 10a immer einen gleichmäßigen hohen Kontrast besitzt. Mit anderen Worten werden die Randpunkte eines Dunkel-Hell-Dunkel-Übergangs gesucht, indem in der jeweiligen Richtung, ausgehend von der geschätzten Position des Mittelpunktes, ein entsprechender Referenzstreifen 81 aus dem Gesamtbild übernommen wird. Die Pixel des Streifens 81 können dabei jeweils gewichtet aus mehreren Bildpunkten (Pixel P) des Grauwert-(GW)-Bildes (GB) bestimmt werden.

Die Breite des Streifens 81 bestimmt die zur Verfügung stehende Umgebung U für die Kontrastbestimmung. Der Kontrast kann in Form der ersten Ableitung bestimmt werden, insbesondere unter Anwendung eines einfachen Kantendetektions-Filter auf den Bildstreifen 81. Jede Richtung, in der die Pixelwolke (PW) des potentiellen Markerelements 10a abgetastet wird ergibt dabei einen Streifen 81 und damit eine diskrete Abtastung der Ableitung in dieser Richtung. Die beiden Konturpunkte in einer bestimmten Richtung müssen sich gerade an dem Minimum bzw. Maximum der Ableitung befinden, wobei zusätzlich die Form der Ableitungskurve herangezogen wird, um die Qualität der Pixelwolke (PW) als Abbild des Markerelementes 10a und damit die Qualität der bestimmten Konturpunktpositionen abzuschätzen.

Für jeden Richtungsschritt ergeben sich somit zwei Konturpunkte und eine Bewertung. Um kontrastreiche Störungen aus der Markerumgebung und schlechte Schätzungen des Mittelpunktes auszugleichen, wird für jeden Richtungsschritt der Mittelpunkt (als Punkt zwischen dessen beiden Konturpunkten) bestimmt und solche Richtungsschritte ausgeschlossen, deren Mittelpunkte zu stark vom Durchschnitt abweichen. Die somit robuster ermittelte neue Schätzung des Mittelpunktes einer Punktwolke (PW) als Abbild eines Markerelementes 10a kann verwendet werden, um in den Ableitungskurven der ausgeschlossenen Richtungsschritte wiederum das Minimum und Maximum in der unmittelbaren Umgebung der Mittelpunktschätzung zu bestimmen, wodurch die erwähnten Störungen in den meisten Fällen vermieden werden.

Der endgültige Mittelpunkt und Radius der Punktwolke (PW) als Abbild eines potentiellen Markerelementes 10a kann nun durch das eingangs erwähnte Ellipsefitting unter Verwendung der zuvor bestimmten Konturpunkte bestimmt werden. Für Fälle, in denen die Schätzung des Markermittelpunktes zu weit entfernt vom tatsächlichen Marker liegt, kann der oben geschilderte Vermessungsansatz iterativ ausgeführt werden, bis die Ergebnisse ausreichend konvertieren bzw. eine maximale Iterationszahl erreicht wurde. Dadurch können Punktwolken (PW) potentieller Markerelemente 10a auch in solchen Situationen sicher lokalisiert werden, in denen eine erste schlechte Schätzung nur in wenigen Richtungsschritten brauchbare Ergebnisse und damit nur eine bessere Schätzung des Mittelpunktes lieferte.

Zur Lokalisierung insbesondere neuer oder verloren gegangener Markerelemente 10 kann in der Lokalisierungseinheit 70 aus dem Graubild (GB) als Eingangsbild mittels Schwellwertbehandlung eine binäre Maske bestimmt werden, in der die "ausreichend hellen" Bildpunkte markiert werden können. "Ausreichend hell" wird dabei bevorzugt nicht durch einen absoluten Schwellwert (SW) definiert, sondern in einer Schwellwertbestimmungseinheit 71 jeweils durch die durchschnittliche Helligkeiten der Umgebung. Aus dieser binären Maske werden dann die Zusammenhangskomponenten ermittelt, die somit alle ausreichend hellen bzw. kontrastreichen geschlossenen Bereiche des, vorzugsweise verkleinerten, Graubildes (GB) repräsentieren. Mit einer einfachen Filterung auf Basis von Schwerpunkt (SW), maximalem Durchmesser und Kovarianz der jeweiligen Bereiche werden solche ausgeschlossen, die zu groß, zu klein oder zu ungleichmäßig geformt sind. Die verbleibenden Bereiche werden dann als Schätzungen für potentielle Markerelemente 10 verwendet, die dann nachfolgend in der Vermessungseinheit 80 - wie oben beschrieben - verfeinert werden.

Diese grobe Ermittlung (Lokalisierung) potentieller Markerkonturen muss immer für jeden vollständigen Frame der Graubilder (GB) erfolgen, auch wenn die Marker mittels des Vermessungsansatzes inkrementell verfolgt werden können, da sonst neue Marker nicht erkannt werden könnten. Um nun nicht unnötigerweise die bereits mit dem Vermessungsansatz erfolgten neu lokalisierten (durch Extrapolation aus vorherigen Messungen gewonnener Markermittelpunkte) bewegten alten Marker erneut mit dem Lokalisierungsansatz bearbeiten zu müssen, werden die Bildbereiche, in denen bereits erfolgreich Markerelemente 10 mit dem Vermessungsansatz lokalisiert wurden, aus der binären Maske ausgeschlossen. Als weitere Beschleunigungsmaßnahme, die teilweise auch die Robustheit des Systems 1 erhöht, werden die Graubilddaten vor Bestimmung der binären Maske um einen bestimmten Faktor (vorzugsweise um wenigstens 2) verkleinert. Hierbei kann sich allerdings eine natürliche Grenze aus der minimal gewünschten Markergröße (im Sinne der Abbildung der Marker) ergeben.

Anders als im Stand der Technik anzutreffen ermöglicht das erfindungsgemäße System erstmals, wenigstens zwei oder mehrere farblich verschiedene, jeweils in einer definierten Farbe und mit rundlicher oder ellipsenförmiger Geometrie strahlender Markerelemente 10 vollautomatisch zu verfolgen und Winkel und andere Messdaten für Bewegungsanalysen zu erfassen.

Das zuvor für eine Kamera 30 beschriebene System 1 kann freilich auch für ein System Verwendung finden, welches mehrere, insbesondere vier bis acht, vorzugsweise sechs, zeitlich synchronisierte Kameras 30 umfasst, so dass damit mehrere parallele synchronisierte Videoströme zur Verfügung stehen. Zur Rekonstruktion der räumlichen (3D) Positionen der Markerelemente 10 werden Kalibrierungsdaten der verwendeten Kameras (und natürlich mindestens zwei Bildquellen) benötigt, was eine genauere Markerverfolgung bzw. Bewegungsanalyse zum Vorteil hat.

Die Ausgabe besteht aus den 3D-Positionen der erkannten Markerelemente 10 in jedem Bild (Frame). Jedes Markerelement 10 bekommt bei seiner ersten Entdeckung einen eindeutigen numerischen Identifikator (ID) zugeordnet. Werden Markerelemente in nachfolgenden Bildern (Frames) nicht mehr gefunden (etwa, weil sie in zu vielen Kamerabildern und in zu vielen aufeinander folgenden Frames verdeckt sind), so bekommen sie bei ihrer Wiederentdeckung eine neue ID zugeordnet. Die 3D-Positionen beziehen sich vorzugsweise auf das Koordinatensystem, in dem auch die extrinsischen Kamerakalibrierungen (Transformationen) definiert sind. Freilich stehen für jeden einzelnen Videostrom auch die intrinsischen Kalibrierungsdaten (Brennweite, Linsenverzerrung) der Kamera 30 zur Verfügung.

Das in bekannten 3D Systemen gewöhnlich anzutreffende Problem, welche Markerelemente in einer Kamera mit den Markelementen in den anderen Kameras korrespondieren, wird schließlich im erfindungsgemäßen System 1 vorteilhaft dadurch gelöst, dass farblich unterscheidbare Markerelemente 10 zum Einsatz kommen, welche eine eindeutige Identifizierung gestatten.

Das erfindungsgemäße Verfolgungssystem 1 kann Videodaten der, bevorzugt kugelförmig ausgebildeter, Markerelemente 10 erstmals echtzeitnah lokalisieren und über die Zeit verfolgen, was Bewegungsanalysen in bislang unbekanntem Komfort und Güte gestattet.

### Bezugszeichenliste

- 1: Bewegungsanalyse- und/oder -verfolgungssystem

- 5: bewegtes oder sich bewegendes Objekt

- 10: Markerelemente
- 10a: aktive Markerelemente, insb. Licht ausstrahlende LED-Leuchten
- 10b: passive Markerelemente, insb. Licht reflektierende prismatische oder sphärische Körper
- 11: Batteriehalterung
- 12: Kugelschirm
- 13: Batterie
- 14: Schalter
- 15: Batterieklemme
- 16: LED

- 20: Beleuchtungsmittel

- 30: Kamera, insb. Videokamera

- 40: Farbbildaufnehmer

- 50: erste Transformatoreinheit
- 51: zweite Transformatoreinheit

- 60: Graubilderzeugungseinheit
- 61: Reduzierungseinheit
- 70: Lokalisierungseinheit
- 71: Schwellwertbestimmungseinheit
- 72: Umfeld

- 80: Vermessungseinheit
- 81: Referenzstreifen

- 90: Identifizierungseinheit

- FB: Farbbild
- P: Farbbildpunkt (Pixel)
- U: Umfeld eines Farbbildpunktes P
- RGB: RGB-Bild; RGB-Farbraum
- GW: Grauwert
- GB: Graubild
- GB_{red.}: reduziertes Graubild
- SW: Schwellwert
- PW: Pixelwolke
- HSV: HSV-Bild; HSV-Farbraum

- α: Abstrahlwinkel der LED 16

## Patentansprüche

1. Bewegungsanalyse- und/oder -verfolgungssystem (1) von bewegten oder sich bewegenden Objekten (5), welche mit mehreren aktiv (10a) oder passiv (10b) farblich verschieden strahlenden Markerelementen (10) versehen sind, die (10) jeweils in einer definierten Farbe und mit rundlicher oder ellipsenförmiger Geometrie strahlen,
wenigstens umfassend:
- zumindest eine Kamera (30) zur Aufnahme der Bewegungen des oder der Objekte (5), welche mittels wenigstens eines Farbbildaufnehmers (40) fortlaufend als digitale Farbbilder (FB) gespeichert werden;
- eine erste Transformatoreinheit (50), welche die digital gespeicherten Farbbilder (FB) fortlaufend in RGB-Bilder des sogenannten RGB-Farbraumes umwandelt, so dass je Farbbildpunkt (Pixel P) drei Farbintensitäten (R, G, B) vorliegen;
- eine Graubilderzeugungseinheit (60), welche je Farbbildpunkt (P) das Maximum der drei Farbintensitäten (R oder G oder B) als Grauwert (GW) übernimmt und korrespondierend zu den RGB-Bildern fortlaufend als monochromes Graubild (GB) speichert;
- eine Lokalisierungseinheit (70), welche ausschließlich jeden Grauwert (GW) mit einem definierten Schwellwert (SW) vergleicht und oberhalb des Schwellwertes (SW) liegende Grauwerte (GW) als Mitglied einer, ein potentielles Markerelement repräsentierende, Pixelwolke (PW) speichert;
- eine Vermessungseinheit (80), welche die Geometrie einer jeden Pixelwolke (PW) ausschließlich im Graubild (GB) vermisst und als Markerelemente (10) ausschließbare Pixelwolken (PW) wieder löscht;
und
- eine Identifizierungseinheit (90), welche die Farbe der ausschließlich im Graubild (GB) als Markerelemente (10) bestätigten Pixelwolken (PW) im digital gespeichertem Farbbild (FB) bestimmt.

2. Bewegungsanalyse- und/oder -verfolgungssystem (1) nach Anspruch 1, weiterhin umfassend
- eine Reduzierungseinheit (61), welche der Lokalisierungseinheit (70) ein verkleinertes, vorzugsweise in Breite und Höhe wenigstens halbiertes, Graubild (GB_{red}.) bereitstellt.

3. Bewegungsanalyse- und/oder -verfolgungssystem (1) nach Anspruch 1 oder 2, weiterhin umfassend
- eine Schwellwertbestimmungseinheit (71), welche den von der Lokalisierungseinheit (70) zugrunde gelegten Schwellwert (SW) in Abhängigkeit der Helligkeitsverteilung im Umfeld (U) des zum Vergleich anstehenden Grauwertes (GW) dynamisch bestimmt.

4. Bewegungsanalysesystem und/oder Verfolgungssystem (1) nach Anspruch 3, **dadurch gekennzeichnet, dass**
das Umfeld (U) der Helligkeitsverteilung wenigstens doppelt so groß bemessen ist wie eine maximal als erlaubt gewählte Größe einer, ein potentielles Markerelement (10) repräsentierenden, Pixelwolke (PW).

5. Bewegungsanalyse- und/oder -verfolgungssystem (1) nach einem der vorherigen Ansprüche, weiterhin umfassend
- eine zweite Transformationseinheit (51), welche der Identifizierungseinheit (90) aus den digital gespeicherten Farbbildern (FB) fortlaufend transformierte HSV-Bilder des sogenannten HSV-Farbraum zur Bestimmung der Farbe eines Markerelementes (10) bereitstellt.

6. Bewegungsanalyse- und/oder -verfolgungssystem (1) nach einem der vorherigen Ansprüche 1 bis 5, **dadurch gekennzeichnet, dass**
das Markerelement (10) ein von wenigstens einem Beleuchtungsmittel (20) angestrahltes retro-refektiv strahlendes Prisma (10b) ist.

7. Bewegungsanalyse- und/oder -verfolgungssystem (1) nach einem der vorherigen Ansprüche 1 bis 5, **dadurch gekennzeichnet, dass**
das Markerelemente (10) als aktiv-selbstleuchtendes Markerelement (10a) ausgebildet ist.

8. Bewegungsanalyse- und/oder -verfolgungssystem (1) nach Anspruch 7, **dadurch gekennzeichnet, dass**
das aktiv-selbstleuchtende Markerelement eine batterieversorgte LED-Leuchte (10a) ist, welche bevorzugt unmittelbar an einer Batteriehalterung (11) befestigt ist.

9. Bewegungsanalyse- und/oder -verfolgungssystem (1) nach Anspruch 8, **dadurch gekennzeichnet, dass** eine jede LED-Leuchte (10a) eine, in einem definierten Farbton strahlende, LED (16) umfasst.

10. Bewegungsanalyse- und/oder -verfolgungssystem (1) nach Anspruch 8 oder 9, **dadurch gekennzeichnet, dass** eine jede LED-Leuchte (10a) drei, jeweils in einer der Grundfarben rot (R), grün (G) und blau (B) strahlende, LEDs (16) umfasst.

11. Bewegungsanalyse- und/oder -verfolgungssystem (1) nach Anspruch 10, **dadurch gekennzeichnet, dass** die LEDs (16) einer drei LEDs (16) umfassenden LED-Leuchte (10a) einzeln oder gemeinsam einschaltbar und/oder ansteuerbar ausgebildet sind und so die jeweilige Grundfarbe rot (R), grün (G) und blau (B) oder eine daraus ableitbare Mischfarbe abstrahlen.

12. Bewegungsanalyse- und/oder -verfolgungssystem (1) nach einem der Ansprüche 8 bis 11, **dadurch gekennzeichnet, dass** eine jede LED (16) einen Abstrahlwinkel alpha (α) von mindestens 130° und bis zu 170° umfasst.

13. Bewegungsanalyse- und/oder -verfolgungssystem (1) nach einem der Ansprüche 8 bis 12, **dadurch gekennzeichnet, dass**
die eine oder mehreren LEDs (16) einer LED-Leuchte (10a) von einem kugelförmigen Schirm (12) umgeben ist.

14. Bewegungsanalyse- und/oder -verfolgungssystem nach einem der vorherigen Ansprüche, **dadurch gekennzeichnet, dass**
mehrere, insbesondere vier bis acht, vorzugsweise sechs, Kameras (30) Verwendung finden.

## Claims

1. System (1) for movement analysis and/or tracking of moved or moving objects (5) which are provided with a plurality of marker elements (10) actively (10a) or passively (10b) emitting different colors, which (10) respectively emit in a defined color and with a round or elliptical geometry, comprising at least:
- at least one camera (30) for recording the movements of the object or objects (5), which are continuously stored as digital color images (FB) by means of at least one color image receiver (40);
- a first transformer unit (50) which continuously converts the digitally stored color images (FB) into RGB images of the so-called RGB color space, so that three color intensities (R, G, B) are available for each color pixel (P);
- a grayscale image generation unit (60) which adopts the maximum of the three color intensities (R or G or B) as a grayscale value (GW) for each color pixel (P) and continuously stores it as a monochrome grayscale image (GB) in a manner corresponding to the RGB images;
- a localization unit (70) which exclusively compares each grayscale value (GW) with a defined threshold value (SW) and stores grayscale values (GW) lying above the threshold value (SW) as members of a pixel cloud (PW) representing a potential marker element;
- a measurement unit (80) which measures the geometry of each pixel cloud (PW) exclusively in the grayscale image (GB) and deletes pixel clouds (PW) which can be excluded as marker elements (10);
and
- an identification unit (90) which determines the color in the digitally stored color image (FB) of the pixel clouds (PW) confirmed as marker elements (10) exclusively in the grayscale image (GB).

2. Movement analysis and/or tracking system (1) according to Claim 1, furthermore comprising
- a reduction unit (61) which provides the localization unit (70) with a reduced grayscale image (GB_{red.}), preferably at least halved in width and height.

3. Movement analysis and/or tracking system (1) according to claim 1 or 2, furthermore comprising
- a threshold value determination unit (71) which dynamically determines the threshold value (SW) used by the localization unit (70) as a function of the brightness distribution in the vicinity (U) of the grayscale value (GW) currently for comparison.

4. Movement analysis and/or tracking system (1) according to claim 3, **characterized in that**
the vicinity (U) of the brightness distribution is dimensioned to be at least two times as large as a maximum size, selected as allowed, of a pixel cloud (PW) representing a potential marker element (10).

5. Movement analysis and/or tracking system (1) according to one of the preceding claims, furthermore comprising
- a second transformer unit (51) which provides the identification unit (90) with HSV images, continuously transformed from the digitally stored color images (FB), of the so-called HSV color space in order to determine the color of a marker element (10).

6. Movement analysis and/or tracking system (1) according to one of the preceding claims 1 to 5, **characterized in that**
the marker element (10) is a retroreflective prism (10b) illuminated by at least one lighting means (20).

7. Movement analysis and/or tracking system (1) according to one of the preceding claims 1 to 5, **characterized in that**
the marker element (10) is formed as an actively self-illuminating marker element (10a).

8. Movement analysis and/or tracking system (1) according to claim 7, **characterized in that**
the actively self-illuminating marker element is a battery-powered LED lamp (10a), which is preferably fastened directly on a battery holder (11).

9. Movement analysis and/or tracking system (1) according to claim 8, **characterized in that** each LED lamp (10a) comprises an LED (16) emitting in a defined hue.

10. Movement analysis and/or tracking system (1) according to claim 8 or 9, **characterized in that** each LED lamp (10a) comprises three LEDs (16) respectively emitting in one of the primary colors red (R), green (G) and blue (B).

11. Movement analysis and/or tracking system (1) according to claim 10, **characterized in that** the LEDs (16) of an LED lamp (10a) comprising three LEDs (16) are formed so that they can be switched on and/or driven individually or together and thus emit the respective primary color red (R), green (G) and blue (B) or a mixed color derivable therefrom.

12. Movement analysis and/or tracking system (1) according to one of claims 8 to 11, **characterized in that** each LED (16) has an emission angle alpha (α) of at least 130° and up to 170°.

13. Movement analysis and/or tracking system (1) according to one of claims 8 to 12, **characterized in that**
the one or more LEDs (16) of an LED lamp (10a) are surrounded by a spherical screen (12).

14. Movement analysis and/or tracking system according to one of the preceding claims, **characterized in that**
a plurality of cameras (30), in particular from four to eight, preferably six, are used.

## Revendications

1. Système d'analyse et/ou de suivi de mouvement (1) d'objets déplacés ou se déplaçant (5), qui sont pourvus de plusieurs éléments marqueurs (10) produisant des rayonnements de couleurs différentes actifs (10a) ou passif (10b), lesquels éléments marqueurs (10) rayonnent respectivement dans une couleur définie et avec une géométrie arrondie ou de forme elliptique,
comprenant au moins :
- au minimum une caméra (30) servant à acquérir les mouvements du ou des objets (5), qui sont stockés en continu en tant qu'images couleur (FB) numériques au moyen d'au moins un dispositif d'acquisition d'images couleur (40) ;
- une première unité de transformation (50) qui transforme en continu les images couleur (FB) stockées numériquement en images RGB de l'espace des couleurs dit RGB de manière à disposer de trois intensités de couleurs (R, G, B) par point d'image couleur (pixel P) ;
- une unité de création d'images grises (60) qui reprend le maximum des trois intensités de couleur (R ou G ou B) en tant que valeur de gris (GW) par point d'image couleur (P) et le stocke en continu en tant qu'image grise (GB) monochrome en correspondance avec les images RGB ;
- une unité de localisation (70) qui compare exclusivement chaque valeur de gris (GW) à une valeur de seuil définie (SW) et stocke les valeurs de gris (GW) supérieures à la valeur de seuil (SW) en tant qu'élément d'un nuage de pixels (PW) représentant un élément marqueur potentiel ;
- une unité de mesure (80) qui mesure la géométrie de chaque nuage de pixels (PW) exclusivement dans l'image grise (GB) et efface de nouveau les nuages de pixels (PW) pouvant être exclus en tant qu'éléments marqueurs (10) ;
et
- une unité d'identification (90) qui détermine la couleur des nuages de pixels (PW) confirmés en tant qu'éléments marqueurs (10) exclusivement dans l'image grise (GB) dans l'image couleur (FB) stockée numériquement.

2. Système d'analyse et/ou de suivi de mouvement (1) selon la revendication 1, comprenant en outre
- une unité de réduction (61) qui fournit à l'unité de localisation (70) une image grise réduite (GB_{red}.) au moins de moitié, de préférence en largeur et en hauteur.

3. Système d'analyse et/ou de suivi de mouvement (1) selon la revendication 1 ou 2, comprenant en outre
- une unité de détermination de valeur de seuil (71) qui détermine dynamiquement la valeur de seuil (SW) sur laquelle se base l'unité de localisation (70) en fonction de la distribution de luminosité dans l'environnement (U) de la valeur de gris (GW) à comparer.

4. Système d'analyse et/ou de suivi de mouvement (1) selon la revendication 3, **caractérisé en ce que**
l'environnement (U) de la distribution de luminosité mesurée est au moins deux fois plus grand que la taille maximale pouvant être sélectionnée d'un nuage de pixels (PW) représentant un élément marqueur potentiel (10).

5. Système d'analyse et/ou de suivi de mouvement (1) selon l'une quelconque des revendications précédentes, comprenant en outre
- une seconde unité de transformation (51) qui fournit à l'unité d'identification (90) des images HSV de l'espace des couleurs dit HSV, transformées en continu à partir des images couleur (FB) stockées numériquement pour déterminer la couleur d'un élément marqueur (10) .

6. Système d'analyse et/ou de suivi de mouvement (1) selon l'une quelconque des revendications 1 à 5 précédentes, **caractérisé en ce que**
l'élément marqueur (10) est un prisme (10b) rayonnant de manière rétro-réfléchissante et éclairé par au moins un moyen d'éclairage (20).

7. Système d'analyse et/ou de suivi de mouvement (1) selon l'une quelconque des revendications 1 à 5 précédentes, **caractérisé en ce que**
l'élément marqueur (10) est réalisé sous la forme d'un élément marqueur (10a) luminescent actif.

8. Système d'analyse et/ou de suivi de mouvement (1) selon la revendication 7, **caractérisé en ce que**
l'élément marqueur luminescent actif est une lampe à LED (10a) alimentée par batterie qui est de préférence fixée à proximité immédiate d'un support de batterie (11).

9. Système d'analyse et/ou de suivi de mouvement (1) selon la revendication 8, **caractérisé en ce que** chaque lampe à LED (10a) comprend une LED (16) rayonnant dans une couleur définie.

10. Système d'analyse et/ou de suivi de mouvement (1) selon la revendication 8 ou 9, **caractérisé en ce que** chaque lampe à LED (10a) comprend trois LED (16), rayonnant respectivement dans l'une des couleurs fondamentales rouge (R), verte (G) et bleue (B).

11. Système d'analyse et/ou de suivi de mouvement (1) selon la revendication 10, **caractérisé en ce que** les LED (16) d'une lampe à LED (10a) comprenant trois LED (16) sont réalisées de manière à pouvoir être mises en circuit et/ou commandées individuellement ou en commun et rayonnent dans la couleur fondamentale respective rouge (R), verte (G) et bleue (B) dans une couleur mélangée pouvant être obtenue à partir de celles-ci.

12. Système d'analyse et/ou de suivi de mouvement (1) selon l'une quelconque des revendications 8 à 11, **caractérisé en ce que** chaque LED (16) comprend un angle de rayonnement alpha (α) d'au moins 130° et allant jusqu'à 170°.

13. Système d'analyse et/ou de suivi de mouvement (1) selon l'une quelconque des revendications 8 à 12, **caractérisé en ce que**
lesdites une ou plusieurs LED (16) d'une lampe à LED (10a) sont entourées par un écran sphérique (12).

14. Système d'analyse et/ou de suivi de mouvement selon l'une quelconque des revendications précédentes, **caractérisé en ce que**
plusieurs, notamment quatre à huit, et de préférence six caméras (30) sont utilisées.
